# EUROPÄISCHE PATENTANMELDUNG

(11) **EP 3 748 449 A1**
(43) Veröffentlichungstag der Anmeldung: **09.12.2020**
(21) Anmeldenummer: 19178242.4
(22) Anmeldetag: 04.06.2019
(51) Int. Cl.: G05B 23/02

(54) **URSACHENANALYSE BEI MELDUNGEN EINES TECHNISCHEN SYSTEMS**

(71) Anmelder: Siemens Aktiengesellschaft, 80333 München (DE)
(72) Erfinder: Wendelberger, Klaus, 68789 St. Leon-Rot (DE)

(57) **Zusammenfassung**

Vorgeschlagen wird ein Verfahren zur automatisierten Identifizierung einer Ursache (12, 15, 16, 18, 22, 25, 28, 32, 33) für eine Erzeugung einer Meldung in einem technischen System (1) und zur automatisierten Verknüpfung der Ursache (12, 15, 16, 18, 22, 25, 28, 32, 33) mit der Meldung (9), umfassend:
a) Ausgehend von einer in einem Leitsystem des technischen Systems (1) vorliegenden Meldung (9) Identifizierung eines der Meldung (9) zugrunde liegenden Parameters, der einem technischen Element (2, 3, 4, 5, 6, 7, 8) des technischen Systems (1) zugeordnet ist;
b) Überprüfung verschiedener leittechnischer Bedingungen (10, 22, 13, 14, 17), die in einem Speicher des Leitsystems hinterlegt sind, und Identifizierung einer Ursache für die Erzeugung der Meldung (9);
c) Für den Fall, dass bei der Überprüfung der verschiedenen leittechnischen Bedingungen (10, 11, 13, 14, 17) gemäß Schritt d keine Ursache (12, 15, 16, 18) für die Erzeugung der Meldung (9) identifiziert worden ist, Überprüfung von mit dem technischen Element (2, 3, 4, 5, 6, 7, 8) wirktechnisch verbundenen weiteren technischen Elementen (2, 3, 4, 5, 6, 7, 8) des technischen Systems (1), dahingehend, ob eines oder mehrere der weiteren technischen Elemente (2, 3, 4, 5, 6, 7, 8) ursächlich für die Erzeugung der Meldung (9) sind;
d) Verknüpfung der Ursache (12, 15, 16, 18, 22, 25, 28, 32, 33) für die Erzeugung der Meldung (9) mit der Meldung (9) in dem Leitsystem des technischen Systems (1) und visuelle Darbietung der verknüpften Meldung (9) an einen Operator des technischen Systems (1).

## Beschreibung

Die Erfindung betrifft ein Verfahren zur automatisierten Identifizierung einer Ursache für eine Erzeugung einer Meldung in einem technischen System und zur automatisierten Verknüpfung der Ursache mit der Meldung mit den Merkmalen des Anspruchs 1. Außerdem betrifft die Erfindung ein Leitsystem für ein technisches System gemäß Anspruch 6. Zudem betrifft die Erfindung eine Verwendung eines Leitsystems zum Betrieb eines technischen Systems gemäß Anspruch 7.

Ein Bediener einer verfahrenstechnischen Anlage wird mit Hilfe von Meldungen, die im Prozessleitsystem der Anlage erzeugt werden, auf Unregelmäßigkeiten im Anlagenbetrieb hingewiesen. Hierzu können die Meldungen in verschiedene Meldeklassen unterteilt werden. Mögliche Meldeklassen sind z.B. Toleranz, Warnung und Alarm.

Eine Meldung weist den Bediener bzw. Anlagenfahrer darauf hin, dass an einer bestimmten Stelle des auf der Anlage ablaufenden verfahrenstechnischen Prozesses eine Unregelmäßigkeit besteht. Beispielsweise kann der Anlagenfahrer die Meldung erhalten, dass eine bestimmte Temperatur zu niedrig ist. Es kann jedoch eine Vielzahl von Ursachen geben, die letztlich zu der Auslösung der Meldung geführt haben. In einer realen prozesstechnischen Anlage mit einer hohen Anzahl von Prozesselementen ist die Anzahl möglicher Ursachen groß. Um die Störung beheben zu können, muss der Anlagenfahrer jedoch ihre Ursache kennen.

In der Regel obliegt es dem Anlagenfahrer, seine Anlage zu analysieren und die Ursache eines Problems zu ermitteln. Aufgrund der Vielzahl von Meldungen, die er regelmäßig während des Anlagenbetriebs erhält, wird damit eine sehr hohe Anforderung an ihn gestellt. Die Ursachenermittlung kann dabei - je nach Störung - sehr aufwändig sein und viel Zeit in Anspruch nehmen.

Der Erfindung liegt die Aufgabe zugrunde, eine Ursache für die Erzeugung einer bestimmten Meldung in einem technischen System schnell und ressourcenschonend aufzufinden.

Diese Aufgabe wird gelöst durch ein Verfahren zur automatisierten Identifizierung einer Ursache für eine Erzeugung einer Meldung in einem technischen System und zur automatisierten Verknüpfung der Ursache mit der Meldung mit den Merkmalen des Anspruchs 1. Außerdem wird die Aufgabe gelöst durch ein Leitsystem für ein technisches System gemäß Anspruch 6 und eine Verwendung eines Leitsystems zum Betrieb eines technischen Systems gemäß Anspruch 7. Vorteilhafte Weiterbildungen ergeben sich aus den abhängigen Ansprüchen.

Ein erfindungsgemäßes Verfahren zur automatisierten Identifizierung einer Ursache für eine Erzeugung einer Meldung in einem technischen System und zur automatisierten Verknüpfung der Ursache mit der Meldung umfasst die folgenden Verfahrensschritte:
a) Ausgehend von einer in einem Leitsystem des technischen Systems vorliegenden Meldung Identifizierung eines der Meldung zugrunde liegenden Parameters, der einem technischen Element des technischen Systems zugeordnet ist;
b) Überprüfung verschiedener leittechnischer Bedingungen, die in einem Speicher des Leitsystems hinterlegt sind, und Identifizierung einer Ursache für die Erzeugung der Meldung;
c) Für den Fall, dass bei der Überprüfung der verschiedenen leittechnischen Bedingungen gemäß Schritt b keine Ursache für die Erzeugung der Meldung identifiziert worden ist, Überprüfung von mit dem technischen Element wirktechnisch verbundenen weiteren technischen Elementen des technischen Systems, dahingehend, ob eines oder mehrere der weiteren technischen Elemente ursächlich für die Erzeugung der Meldung sind;
d) Verknüpfung der Ursache für die Erzeugung der Meldung mit der Meldung in dem Leitsystem des technischen Systems.

Unter einem technischen System wird vorliegend eine Mehrzahl an Maschinen, Geräten, Applikationen oder dergleichen verstanden, die in einem funktionalen und oftmals auch räumlichen Zusammenhang zueinanderstehen. Mittels des technischen Systems können beispielsweise in (groß-)technischen Dimensionen Produkte, Komponenten und dergleichen erzeugt bzw. gefertigt werden. Bei dem technischen System kann es sich beispielsweise aber auch um ein Automobil, ein Schiff, ein Flugzeug oder dergleichen handeln.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozess- oder fertigungsnahe Komponenten, die zur Ansteuerung der Aktoren bzw. Sensoren dienen. Darüber hinaus weist das Leitsystem u.a. Mittel zur Visualisierung der technischen Anlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Unter einem Operator wird ein menschlicher Bediener des technischen Systems verstanden. Der Operator interagiert mittels spezieller Benutzerschnittstellen mit dem technischen System bzw. dessen Leitsystem und steuert spezielle technische Funktionen des Systems. Hierzu kann der Operator ein Bedien- und Beobachtungssystem des Leitsystems nutzen.
Eine Anfrage des Operators kann beispielsweise das Setzen eines Stellwerts eines Reglers des technischen Systems sein. Der Operator stellt die Anfrage an das Leitsystem, welches die Anfrage im Rahmen der Bearbeitung zunächst ausliest und deren Inhalt im Rahmen zuvor festgelegter Regeln interpretiert. Je nach Inhalt der Anfrage werden verschiedene Geräte / Komponenten des technischen Systems von dem Leitsystem adressiert. Im Falle des Setzens eines Stellwerts eines Reglers kann die Anfrage unter anderem Informationen über einen Vorher-Wert und einen Nachher-Wert und eine Kennung des zu adressierenden Objekts des technischen Systems beinhalten.

Unter einer Meldung wird allgemein ein Bericht vom Eintreten eines Ereignisses verstanden, das einen Übergang aus einem diskreten Zustand innerhalb des technischen Systems in einen anderen diskreten Zustand darstellt. Dadurch wird ermöglicht, dass der oder die Operatoren möglichst frühzeitig genau über die Folge bzw. das Ergebnis ihrer Handlungen (die Folge ihrer Anfragen) bzw. über das Ergebnis eines automatischen Betriebs des technischen Systems im jeweiligen Systemkontext informiert werden. Hierzu bietet das Leitsystem dem Operator die verknüpften Informationen dar, beispielsweise mittels eines hierfür geeigneten Clients eines Servers des Leitsystems. Unter dem Begriff "Alarmmeldung" wird vorliegend eine Meldung verstanden, die eine in der Regel unverzügliche Reaktion des Operators des technischen Systems erfordert. Unter dem Begriff "Warnung" wird z.B. eine Meldung verstanden, die eine zeitnahe Reaktion des Operators des technischen Systems erfordert.

Es wird von einer Meldung ausgegangen, die in dem Leitsystem des technischen Systems vorliegt. Dabei ist es unwesentlich, ob das Leitsystem selbst aufgrund bestimmter Regeln die Meldung erzeugt hat oder ob das Leitsystem die Meldung von einem technischen Element des technischen Systems empfangen hat.

Zunächst wird der der Meldung zugrunde liegende Parameter identifiziert. Dies kann beispielsweise ein Spannungswert oder ein Temperaturwert sein. Dieser Parameter ist einem technischen Element des technischen Systems zugeordnet. Bei dem technischen Element kann es sich beispielsweise um einen Kessel handeln, in dessen Innerem ein Druckwert als Parameter mittels eines Drucksensors erfasst und an das Leitsystem weitergegeben wird.

Zur Durchführung einer Analyse möglicher leittechnischer Ursachen wird durch Fragestellungen bzw. das Überprüfen von leittechnischen Bedingungen die Ursache für die Meldung ermittelt bzw. identifiziert. Die Daten, mit deren Hilfe die jeweiligen Fragestellungen beantwortet bzw. die leittechnischen Bedingungen abgefragt werden können, sind in einem Speicher des Leitsystems hinterlegt. Das Schema der Fragestellungen kann als vorgegebener Regelsatz, mit dem mögliche leittechnische Ursachen für Störungen grundsätzlich überprüft werden können, verstanden werden.

Mögliche leittechnische Bedingungen für das Beispiel einer Regelgröße, die als Parameter der Meldung zugrunde liegt, sind (Aufzählung nicht erschöpfend):
- Befindet sich ein dazugehöriger Regler in einem Automatikmodus?
- Befindet sich der Regler an einem unteren oder oberen Anschlag?
- Folgt ein mit dem Regler verbundenes Ventil dem Regler?

Wurde bei der zuvor beschriebenen leittechnischen Analyse keine Fehlerursache gefunden, werden mit dem technischen Element wirktechnisch verbundene weitere technische Elemente des technischen Systems untersucht. Dabei kann sequenziell oder parallel vorgegangen werden, d.h. die einzelnen weiteren technischen Elemente können nach und nach untersucht werden oder, eine entsprechende Hardware vorausgesetzt, parallel analysiert werden. Welche möglichen Störungen ein bestimmtes technisches Element bzw. ein bestimmter Elementtyp aufweisen kann, bzw. auf welche Störungen es zu untersuchen ist, ist dem Leitsystem bekannt, beispielsweise aufgrund entsprechend (beispielsweise in dem Leitsystem) hinterlegter Regeln.

Der Begriff "wirktechnisch verbunden" meint dabei, dass der Parameter von dem oder den weiteren technischen Elementen beeinflusst wird. Beispielsweise steht der Parameter "Füllstand" eines Tanks mit den technischen Elementen "Einlassöffnung" und "Auslassöffnung" oder "Pumpe" in einer wirktechnischen Verbindung. Weitere Beispiele werden anhand der Figurenbeschreibung erläutert. Um die wirktechnischen Verbindungen zu ermitteln, kann beispielsweise auf einen Rohrleitungs- und Instrumentierungsplan des technischen Systems zurückgegriffen werden. Allgemein können jegliche Formen von Analysen verwendet werden, um einen Aufbau bzw. eine Struktur des technischen Systems, insbesondere einen verfahrenstechnischen Aufbau, zu ermitteln, um damit die erforderlichen "wirktechnischen Verbindungen" zu bestimmen, die das jeweilige technische Element betreffen.

Die Vorteile des erfindungsgemäßen Verfahrens bestehen darin, dass dem Bediener bzw. Operator der technischen Anlage eine höherwertige Information im Falle einer Störung, d.h. einer Meldung zur Verfügung gestellt werden kann. Er wird direkt auf die Ursache der Störung hingewiesen, was eine deutliche Zeitersparnis darstellt. Dabei kann ihm diese Funktionalität zur Verfügung gestellt werden, ohne dass hierfür ein zusätzlicher Projektierungsaufwand erbracht werden müsste.

Im Rahmen der Überprüfung, ob eines oder mehrere der weiteren Elemente ursächlich für die Erzeugung der Meldung sind, können bevorzugt eine oder mehrere das jeweilige weitere technische Element charakterisierende Modellgleichungen miteinbezogen werden. Hierdurch kann ein (Störungs-)Zustand des oder der weiteren technischen Elemente ermittelt werden.

Alternativ oder zusätzlich zu der Verwendung von Modellgleichungen können historische Daten miteinbezogen werden, die einen Normalbetrieb des jeweiligen technischen Elements beschreiben, um den (Störungs-)Zustand des oder der weiteren technischen Elemente zu ermitteln.

Im Rahmen einer Weiterbildung der Erfindung wird bei der Überprüfung gemäß Schritt c des erfindungsgemäßen Verfahrens, ob eines oder mehrere der weiteren technischen Elemente ursächlich für die Erzeugung der Meldung sind, auf ein in dem Leitsystem des technischen Systems hinterlegtes selbstlernendes System zurückgegriffen, um ein Muster der aktuellen Meldung mit bereits bekannten oder ähnlichen Mustern vergangener Meldungen zu vergleichen. Bei dem selbstlernenden System kann es sich beispielsweise um ein neuronales Netzwerk handeln.

Durch diese vorteilhafte Weiterbildung der Erfindung kann erreicht werden, dass bei Störungen, die in der gleichen Art und Weise häufiger auftreten, nicht wiederholt eine komplette Analyse der wirktechnisch verbundenen weiteren Elemente durchgeführt werden muss. Vielmehr kann die Ursache des Alarms direkt aus historischen Daten ermittelt werden. Voraussetzung hierfür ist jedoch, dass dem Leitsystem entsprechende "Erfahrungswerte" vorliegen bzw. das selbstlernende System entsprechend trainiert worden ist.

Bei einer bevorzugten Weiterbildung des Verfahrens wird, für den Fall, dass die für die Erzeugung der Meldung ermittelte Ursache dem Leitsystem bereits bekannt ist, die Meldung in dem Leitsystem mit einem niedrigen Prioritätsindex versehen oder aus dem Leitsystem entfernt, bevor die visuelle Darbietung an den Operator erfolgt. Tritt in einem komplexeren technischen System eine Störung auf, kann diese zu einer Vielzahl von Meldungen führen. Die Folgealarme sind für den Operator jedoch oft nur von sekundärer Bedeutung. Mittels der erläuterten Weiterbildung des Verfahrens werden Meldungen, deren Ursache dem Leitsystem bzw. dem Operator schon bekannt ist, derart unterdrückt (niedrige Priorität oder Entfernen), dass der Operator nur mit einer deutlich geringeren "Meldungsflut" konfrontiert wird - ohne dabei sicherheitstechnische Risiken einzugehen.

Die Aufgabe wird zudem gelöst durch ein Leitsystem für eine technische Anlage, insbesondere eine Fertigungs- oder Prozessanlage, das dazu ausgebildet und vorgesehen ist, ein Verfahren wie zuvor erläutert durchzuführen.

Zudem wird die Aufgabe gelöst durch die Verwendung eines solchen Leitsystems zum Betrieb eines technischen Systems.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit den Zeichnungen näher erläutert wird. Es zeigen:
- FIG 1: ein technisches System in einer schematischen Darstellung;
- FIG 2: einen ersten Aspekt eines erfindungsgemäßen Verfahrens; und
- FIG 3: einen zweiten Aspekt eines erfindungsgemäßen Verfahrens.

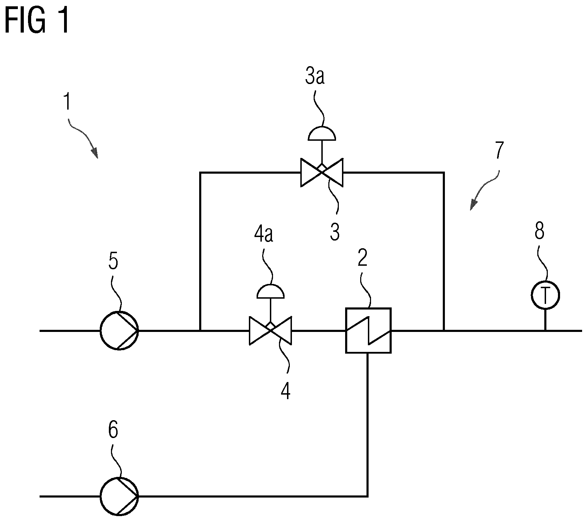

FIG 1 zeigt ein als verfahrenstechnische Anlage ausgebildetes technisches System 1. Das technische System 1 weist eine Mehrzahl von technischen Elementen in Form eines Wärmetauschers 2, eines ersten Ventils 3, eines zweiten Ventils 4, einer ersten Pumpe 5, einer zweiten Pumpe 6 und mehreren Rohrleitungen 7 auf. Das erste Ventil 3 wird mittels eines ersten Aktors 3a und das zweite Ventil 4 mittels eines zweiten Aktors 4a angesteuert.

Ein Temperatursensor (mit "T" gekennzeichnet) 8 erfasst einen Parameter (die Temperatur) innerhalb einer der Rohrleitungen 7 und überträgt ihn an ein nicht dargestelltes Leitsystem des technischen Systems 1. Die Rohrleitung 7 stellt dabei ein technisches Element dar, welchem der Parameter zugeordnet ist. Wenn der Temperatursensor 8 einen Temperaturwert misst, der ober- oder unterhalb bestimmter Schwellwerte liegt, erfasst dies das Leitsystem und erzeugt eine Meldung.

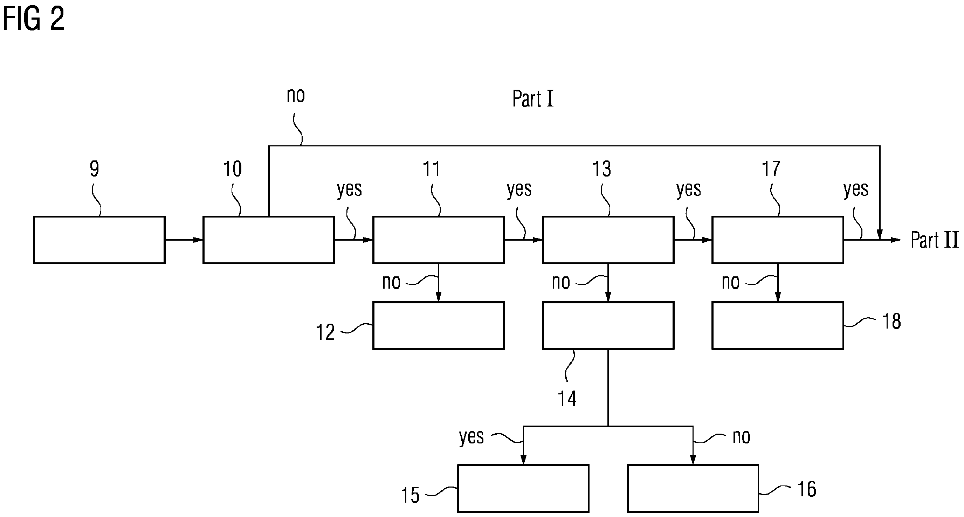

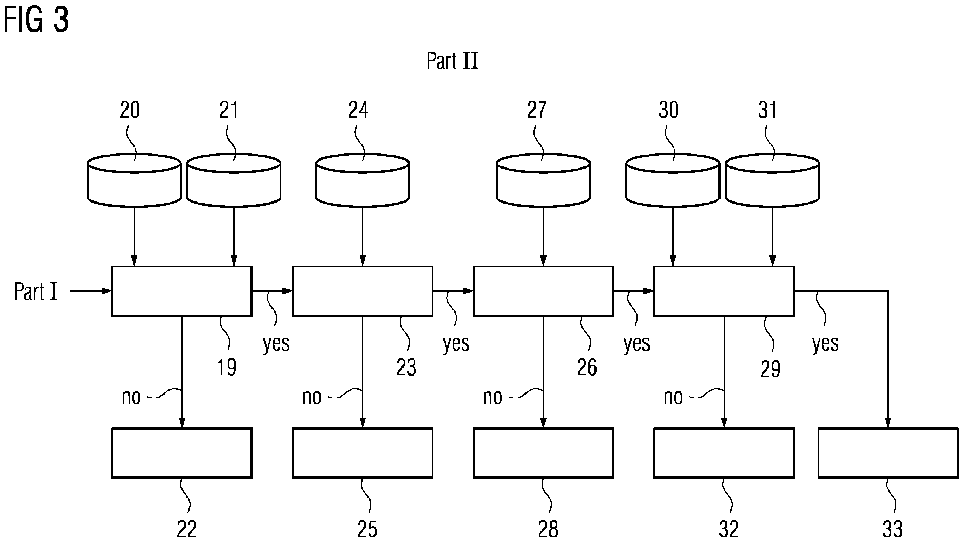

Die Meldung kann dabei vielfältige Ursachen haben. Beispielsweise kann der Wärmetauscher 2 aufgrund einer Verschmutzung ineffizient arbeiten. Weiterhin kann eine der Rohrleitungen 7 verstopft oder die zweite Pumpe 6 defekt sein. Um aus der Menge an möglichen Ursachen sofort die richtige, zu der Meldung gehörige Ursache erkennen zu können, kann das im Folgenden anhand von FIG 2 und FIG 3 erläuterte Verfahren vorteilhafterweise angewandt werden.

Dabei repräsentiert FIG 2 einen ersten Teil eines erfindungsgemäßen Verfahrens, in dem eine Überprüfung der Meldung auf leittechnische Ursachen durchgeführt wird. In einem zweiten Teil des erfindungsgemäßen Verfahrens wird dann eine Überprüfung der Meldung auf prozesstechnische Ursachen durchgeführt. Dieser zweite Teil ist in FIG 3 dargestellt. In beiden Teilen erfolgt die Überprüfung entsprechend vorgegebener Regeln. Im zweiten Teil erfolgt die Überprüfung zusätzlich in Abhängigkeit des Aufbaus der verfahrenstechnischen Anlage, d.h. in Abhängigkeit davon, wie die technischen Elemente des technischen Systems 1 miteinander verbunden sind.

Das erfindungsgemäße Verfahren wird im Folgenden beispielhaft anhand konkreter, angenommener Regelsätze erläutert.

In FIG 2 ist der Ablauf eines ersten Teils eines erfindungsgemäßen Verfahrens in einem Flussdiagramm ausgehend von einer in dem Leitsystem des technischen Systems 1 befindlichen Meldung 9 dargestellt. Die Meldung 9 hat dabei beispielsweise eine Unterschreitung eines bestimmten Schwellwerts eines Parameters "Temperatur" zum Inhalt. Zunächst wird im Rahmen einer ersten regelungstechnischen Bedingung 10 überprüft, ob der Parameter überhaupt einer Regelung unterliegt. Ist dies nicht der Fall, so "springt" das Verfahren zu einem zweiten Teil, der in FIG 3 dargestellt ist.

Für den Fall, dass der Parameter "Temperatur" einer Regelung unterliegt, wird im Rahmen einer zweiten regelungstechnischen Bedingung 11 überprüft, ob sich ein dem Parameter zugeordneter Regler in einem Automatikmodus befindet. Falls sich der Regler nicht im Automatikmodus befinden sollte, läge die Ursache 12 für die Meldung 9 darin, dass sich der Regler in einem manuellen Modus befindet.

Falls sich der Regler im Automatikmodus befinden sollte, wird eine dritte regelungstechnische Bedingung 13 überprüft. Hierbei wird analysiert, ob der Regler sich an einer unteren oder oberen Grenze befindet. Falls nein, wird im Rahmen einer vierten regelungstechnischen Bedingung 14 geprüft, ob ein Sollwert des Reglers kleiner als ein Schwellwert für die Meldung ist. Ist dies der Fall, so liegt die Ursache 15 für die Meldung 9 darin, dass die Reglerparameter nicht optimal sind.

Ist dies nicht der Fall, so liegt die Ursache 16 für die Meldung 9 darin, dass der Sollwert für den Regler falsch gewählt ist.

Falls sich der Regler an einer unteren oder oberen Grenze befindet, wird im Rahmen einer fünften regelungstechnischen Bedingung 17 geprüft, ob ein zu dem Regler gehöriges Ventil dem Regler folgt. Ist dies nicht der Fall, so liegt die Ursache 18 für die Meldung 9 darin, dass das Ventil defekt ist. Ist dies jedoch der Fall, so ist der erste Teil ("Part I") des erfindungsgemäßen Verfahrens ohne das Ermitteln einer Ursache für die Meldung durchlaufen und das Verfahren springt zum zweiten Teil ("Part II"), das in FIG 3 dargestellt ist.

Im Folgenden werden die mit einem zu dem Parameter "Temperatur" gehörigen technischen Element (in FIG 1 wäre dies die Rohrleitung 7) wirktechnisch verbundenen weiteren technischen Elemente dahingehend überprüft, ob sie die Ursache für die Erzeugung der Meldung 9 darstellen. In einer ersten Prüfung 19 wird eine Effizienz des Wärmetauschers 2 überprüft. Hierzu werden erste Modellgleichungen 20 und erste historische Daten 21 berücksichtigt, die jeweils in dem Leitsystem des technischen Systems 1 hinterlegt sind. Falls die Effizienz des Wärmetauschers 2 nicht ausreichend hoch ist, liegt die Ursache 22 für die Erzeugung der Meldung 9 bei einem Defekt bzw. einer Verschmutzung des Wärmetauschers 2.

Falls die Effizienz des Wärmetauschers 2 ausreichend hoch ist, wird im Rahmen einer zweiten Prüfung 23 getestet, ob eine Fluidströmung auf der Kühlseite des Wärmetauschers 2 ausreichend groß ist. Hierzu werden zweite historische Daten 24 bezüglich der Fluidströmung hinzugezogen. Ist die Fluidströmung nicht ausreichend groß, so liegt die Ursache 25 für die Erzeugung der Meldung 9 bei einer Blockierung der Rohrleitung 7 auf der Kühlseite des Wärmetauschers 2.

Falls die Fluidströmung auf der Kühlseite des Wärmetauschers 2 ausreichend groß ist, wird im Rahmen einer dritten Prüfung 26 getestet, ob eine Fluidströmung auf der Wärmeseite des Wärmetauschers 2 zu niedrig ist. Hierzu werden dritte historische Daten 27 bezüglich der Fluidströmung hinzugezogen. Ist die Fluidströmung auf der Wärmeseite nicht zu niedrig, so liegt die Ursache 28 für die Erzeugung der Meldung 9 darin, dass der Sensor, der die Temperatur ermittelt, defekt ist.

Ist die Fluidströmung auf der Wärmeseite zu niedrig, wird im Rahmen einer vierten Prüfung 29 geprüft, ob eine Druckdifferenz entlang der Rohrleitung 7 auf der Wärmeseite des Wärmetauschers 2 ausreichend niedrig ist. Hierzu werden zweite Modellgleichungen 30 und vierte historische Daten 31 berücksichtigt, die in dem Leitsystem des technischen Systems 1 hinterlegt sind. Ist die Druckdifferenz nicht ausreichend niedrig, so liegt die Ursache 32 für die Erzeugung der Meldung 9 darin, dass die Rohrleitung 7 auf der Wärmeseite des Wärmetauschers 2 blockiert ist. Ist die Druckdifferenz ausreichend niedrig, so liegt die Ursache 33 für die Erzeugung der Meldung 9 darin, dass die Pumpe 6, die mit dem Wärmetauscher 2 verbunden ist, defekt ist.

Wenn eine Ursache 12, 15, 16, 18, 22, 25, 28, 32, 33 für die Erzeugung der Meldung 9 ermittelt werden kann, wird diese mit der Meldung 9 in dem Leitsystem des technischen Systems 1 verknüpft und zusammen mit der verknüpften Meldung 9 einem Operator des technischen Systems 1 dargeboten. Wenn die für die Erzeugung der Meldung 9 ermittelte Ursache 12, 15, 16, 18, 22, 25, 28, 32, 33 dem Leitsystem bereits bekannt ist, wird die Meldung 9 in dem Leitsystem mit einem niedrigen Prioritätsindex versehen oder aus dem Leitsystem entfernt, bevor die visuelle Darbietung an den Operator erfolgt. Dadurch wird sichergestellt, dass nicht zahlreiche Meldungen und Folgemeldung, die dieselbe Ursache haben, angezeigt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur automatisierten Identifizierung einer Ursache (12, 15, 16, 18, 22, 25, 28, 32, 33) für eine Erzeugung einer Meldung in einem technischen System (1) und zur automatisierten Verknüpfung der Ursache (12, 15, 16, 18, 22, 25, 28, 32, 33) mit der Meldung (9), umfassend:
a) Ausgehend von einer in einem Leitsystem des technischen Systems (1) vorliegenden Meldung (9) Identifizierung eines der Meldung (9) zugrunde liegenden Parameters, der einem technischen Element (2, 3, 4, 5, 6, 7, 8) des technischen Systems (1) zugeordnet ist;
b) Überprüfung verschiedener leittechnischer Bedingungen (10, 22, 13, 14, 17), die in einem Speicher des Leitsystems hinterlegt sind, und Identifizierung einer Ursache für die Erzeugung der Meldung (9);
c) Für den Fall, dass bei der Überprüfung der verschiedenen leittechnischen Bedingungen (10, 11, 13, 14, 17) gemäß Schritt b keine Ursache (12, 15, 16, 18) für die Erzeugung der Meldung (9) identifiziert worden ist, Überprüfung von mit dem technischen Element (2, 3, 4, 5, 6, 7, 8) wirktechnisch verbundenen weiteren technischen Elementen (2, 3, 4, 5, 6, 7, 8) des technischen Systems (1), dahingehend, ob eines oder mehrere der weiteren technischen Elemente (2, 3, 4, 5, 6, 7, 8) ursächlich für die Erzeugung der Meldung (9) sind;
d) Verknüpfung der Ursache (12, 15, 16, 18, 22, 25, 28, 32, 33) für die Erzeugung der Meldung (9) mit der Meldung (9) in dem Leitsystem des technischen Systems (1) und visuelle Darbietung der verknüpften Meldung (9) an einen Operator des technischen Systems (1).

2. Verfahren nach Anspruch 1, bei dem im Rahmen der Überprüfung gemäß Schritt c von Anspruch 1, ob eines oder mehrere der weiteren technischen Elemente (2, 3, 4, 5, 6, 7, 8) ursächlich für die Erzeugung der Meldung (9) sind, eine oder mehrere das jeweilige weitere technische Element (2, 3, 4, 5, 6, 7, 8) charakterisierende Modellgleichungen (20, 30) miteinbezogen werden.

3. Verfahren nach Anspruch 1 oder 2, bei dem im Rahmen der Überprüfung gemäß Schritt c von Anspruch 1, ob eines oder mehrere der weiteren technischen Elemente (2, 3, 4, 5, 6, 7, 8) ursächlich für die Erzeugung der Meldung (9) sind, historische Daten (21, 24, 27, 31) miteinbezogen werden, die einen Normalbetrieb des jeweiligen technischen Elements (2, 3, 4, 5, 6, 7, 8) beschreiben.

4. Verfahren gemäß einem der vorangegangenen Ansprüche, bei dem im Rahmen der Überprüfung gemäß Schritt c von Anspruch 1, ob eines oder mehrere der weiteren technischen Elemente (2, 3, 4, 5, 6, 7, 8) ursächlich für die Erzeugung der Meldung (9) sind, auf ein in dem Leitsystem des technischen Systems (1) hinterlegtes selbstlernendes System zurückgegriffen wird, um ein Muster der aktuellen Meldung (9) mit bereits bekannten oder ähnlichen Mustern vergangener Meldungen zu vergleichen.

5. Verfahren nach einem der vorangegangenen Ansprüche, bei dem für den Fall, dass die für die Erzeugung der Meldung (9) ermittelte Ursache 12, 15, 16, 18, 22, 25, 28, 32, 33 dem Leitsystem bereits bekannt ist, die Meldung (9) in dem Leitsystem mit einem niedrigen Prioritätsindex versehen oder aus dem Leitsystem entfernt wird, bevor die visuelle Darbietung an den Operator erfolgt.

6. Leitsystem für ein technisches System (1), insbesondere eine Fertigungs- oder Prozessanlage, das dazu ausgebildet und vorgesehen ist, ein Verfahren gemäß einem der vorangegangenen Ansprüche durchzuführen.

7. Verwendung eines Leitsystems gemäß Anspruch 6 zum Betrieb eines technischen Systems (1), insbesondere einer Fertigungs- oder Prozessanlage.
